# EUROPÄISCHE PATENTSCHRIFT

(11) **EP 1 495 526 B1**
(45) Veröffentlichungstag und Bekanntmachung des Hinweises auf die Patenterteilung: **25.02.2009**
(21) Anmeldenummer: 03725037.0
(22) Anmeldetag: 15.04.2003
(51) Int. Cl.: H02J 7/00

(54) **LADEKONTROLLSCHALTUNG FÜR EIN BATTERIEPACK AUS WIEDERAUFLADBAREN BATTERIEELEMENTEN**
BATTERY CHARGE CONTROL CIRCUIT FOR A BATTERY PACK CONSISTING OF RE-CHARGEABLE BATTERY ELEMENTS
CIRCUIT DE CONTROLE DE CHARGE POUR UN BLOC-BATTERIE CONSTITUE D'ELEMENTS DE BATTERIE RECHARGEABLES

(30) Priorität: 16.04.2002 DE 10216831
(43) Veröffentlichungstag der Anmeldung: 12.01.2005
(73) Patentinhaber: Sanyo Component Europe GmbH, 81829 München (DE)
(72) Erfinder: THORSOE, Jan, 9230 Svenstrup (DK); OEFELE, Karl, 83661 Lenggries (DE)
(74) Vertreter: Tiesmeyer, Johannes
(86) Internationale Anmeldenummer: PCT/EP2003/003941
(87) Internationale Veröffentlichungsnummer: WO 2003/088446

(56) Entgegenhaltungen:
- EP-A- 0 880 214

## Beschreibung

Die Erfindung betrifft eine Ladekontrollschaltung für ein Batteriepack aus wiederaufladbaren Batterieelementen, die in jeweiligen Parallelzweigen einer Parallelschaltung von Batteriespannungsquellen angeordnet sind, wobei die Ladekontrollschaltung Zustandsüberwachungsmittel zur Überwachung des Batteriezustandes von Batterieelementen umfasst und wobei die Ladekontrollschaltung von den Zustandsüberwachungsmitteln steuerbare Schalter zur Stromflussunterbrechung bzw. Stromflussfreigabe umfasst.

Wiederaufladbare Batterieelemente können in bekannter Weise zu einem wiederaufladbaren Batteriepack zusammengefasst werden, welches z.B. als Traktionsbatterie für Arbeitsgeräte, Kleinfahrzeuge, Elektroboote usw. verwendet werden kann. Zur Bereitstellung einer hinreichend großen Batteriekapazität kann man Batteriespannungsquellen gleicher Nennspannung parallel schalten, wobei theoretisch die Summe der Einzelkapazitäten der Batteriespannungsquellen der Gesamtkapazität des Batteriepacks entspricht. Sollen nun die in Parallelschaltung zueinander vorzusehenden Batteriespannungsquellen eine Nennspannung haben, die über der Nennspannung der verfügbaren bzw. ausgewählten Einzelbatterieelemente liegt, so besteht die Möglichkeit, diese Einzelbatterieelemente gruppenweise in Reihenschaltungen zusammenzufassen, so dass jede Gruppe einen Parallelzweig der Parallelschaltung von Batteriespannungsquellen bildet. Die Nennspannung jeder Gruppe ergibt sich aus der Summe der Nennspannungen der in Reihe geschalteten Einzelbatterien der Gruppe.

So können beispielsweise Batteriepacks aus Nickel-Cadmium-Batterieelementen (NiCd) oder aus Nickel-Metallhydrid-Batterieelementen (NiMH) so ausgelegt sein, dass sie herkömmliche Bleibatterieblöcke ersetzen können, um elektrische Verbraucher mit vergleichsweise großem Energiebedarf zu versorgen.

Es hat sich gezeigt, dass solche Batteriepacks aus NiCd-Elementen oder aus NiMH-Elementen wesentliche Vorteile gegenüber den konventionellen Bleibatterieblöcken haben. So weisen NiCd- und NiMH-Batteriesysteme eine höhere Energiedichte als Bleibatterien bei gleicher Kapazität auf und benötigen daher entsprechend weniger Platz bzw. Einbauraum. Der Ladevorgang nimmt bei NiCd-Batteriesystemen und bei NiMH-Batteriesystemen erheblich weniger Zeit in Anspruch als bei Bleibatterien entsprechender Kapaztität. Ein wiederaufladbares Batteriepack aus NiCd-Elementen oder aus NiMH-Elementen hat ferner ein erheblich geringeres Gewicht als eine Bleibatterie gleicher Kapazität.

Batteriepacks aus ursprünglich einzeln handhabbaren Batterieelementen können überdies in flexibler Weise für spezifische Anforderungen hinsichtlich der Nennspannung und auch hinsichtlich der Batteriekapazität bereitgestellt werden.

Soll das Batteriepack z.B. eine Nennspannung von 24 V haben, so lässt sich dies realisieren, indem beispielsweise 20 NiCd-Einzelbatterien mit einer jeweiligen Nennspannung von 1,2 V in Reihe geschaltet werden. Damit erhält man dann einen Batterieblock mit einer Nennspannung von 24 V. Entsprechend der geforderten Batteriekapazität sind dann entsprechend viele solcher 24 V-Batterieblöcke parallel zu schalten.

Versuche mit solchen Batteriepacks aus parallel geschalteten Batteriespannungsquellen, die ihrerseits aus einer jeweiligen Gruppe von in Reihe geschalteten Batterieelementen bestehen können, haben jedoch gezeigt, dass insbesondere Batteriepacks größerer Kapazität, also Batteriepacks mit einer großen Anzahl parallel geschalteter Batterieblöcke, eine vergleichsweise geringe Batterielebensdauer und überdies Verschlechterungen der elektrischen Eigenschaften aufwiesen. Dies konnte insbesondere darauf zurückgeführt werden, dass sich die parallel geschalteten Batterieblöcke aufgrund unterschiedlicher Ladungszustände in unerwünschter Weise gegenseitig beeinflusst haben. So konnte beim Entladen des Batteriepacks über einen Verbraucher erheblicher Stromfluss zwischen einzelnen Blöcken festgestellt werden, der zu unzulässig starker und die Alterung der Batterien beschleunigender Aufheizung des Batteriepacks geführt hat.

Hierin liegt ein grundsätzliches Problem solcher Batteriepacks. Die einzelnen Batterieelemente bzw. Batteriezellen weisen Exemplarstreuungen z.B. aufgrund von Fertigungstoleranzen auf und verhalten sich dementsprechend unterschiedlich, wobei noch hinzukommt, dass das Batterieverhalten in starkem Maß von der Batterietemperatur abhängt. Diese unerwünschten und nicht ohne weiteres zu vermeidenden Unterschiede zwischen den Batteriezellen äußern sich in unterschiedlichen elektrischen Eigenschaften der aus ihnen gebildeten und in Parallelschaltung miteinander gekoppelten Batteriespannungsblöcke. Problematisch sind insbesondere Unterschiede hinsichtlich des Ladeverhaltens der einzelnen Batteriespannungsblöcke. So kann es vorkommen, dass einzelne Blöcke über einen optimalen Voll-Ladezustand hinaus geladen werden, wobei dann die ihnen zugeführte elektrische Energie zu einem wesentlichen Teil in Wärme umgesetzt wird, während andere Batterieblöcke des Batteriepacks ihren optimalen Voll-Ladezustand noch nicht erreicht haben. Im Bereich der überladenen Batterieblöcke kommt es dabei zu einer starken Temperaturerhöhung, wodurch die Alterung des Batteriepacks beschleunigt wird.

Eine Batterieschutzschaltung, die sowohl als Ladekontrollschaltung als auch als Entladekontrollschaltung ausgestattet ist und die eingangs genannten Merkmale umfasst, hat wiederaufladbare Batterieelemente, die in jeweiligen Parallelzweigen einer Parallelschaltung von Batteriespannungsquellen angeordnet sind. Als Zustandsüberwachungsmittel weist die bekannte Schaltung eine Spannungsmessschaltung auf, mittels welcher die Spannungen der einzelnen Batterieelemente überwacht werden. Sobald die Spannung auch nur in einem einzelnen Batterieelement außerhalb eines Sollbereichs liegt, steuert die Spannungsmessschaltung die Stromunterbrechungsschalter an, so dass die komplette Batterieeinheit abgeschaltet wird und nicht weiter entladen bzw. geladen werden kann. Die Batterieeinheit geht somit stehts außer Betrieb, wenn auch nur ein einzelnes Batterieelement (Batteriezelle) mit seiner Spannung aus dem Sollspannungsbereich fällt. Bei einem Batteriepack mit einer großen Anzahl von Batterieelementen (Batteriezellen) ist daher die Wahrscheinlichkeit eines frühzeitigen Ausfalls der Batterie relativ groß. EP-A-0 880 214 offenbart eine Schaltung mit den im Oberbegriff der Ansprüche 1 und 11 angegebenen Merkmalen.

Der vorliegenden Erfindung liegt die Aufgabe zugrunde, eine Ladekontrollschaltung und eine Entladekontrollschaltung für ein Batteriepack aus wiederaufladbaren Batterieelementen, die in jeweiligen Parallelzweigen einer Parallelschaltung von Batteriespannungsquellen angeordnet sind, bereitzustellen und somit eine Möglichkeit zu schaffen, Batteriepacks auch größerer Kapazität mit einer Vielzahl parallel geschalteter Batterieblöcke zuverlässig und langlebig als elektrische Energiequellen zu betreiben, wobei die Ladekontrollschaltung bei Batteriepacks mit einer Vielzahl von Parallelschaltungen verhindert, dass das komplette Batteriepack abgeschaltet wird, nur weil eine einzelne Zelle einen Zustand einnimmt, welcher die Zustandsüberwachungsmittel zur Schalteraktivierung veranlasst.

Unter dem Aspekt der Bereitstellung einer Ladekontrollschaltung wird zur Lösung dieser Aufgabe erfindungsgemäß vorgeschlagen, dass jedem Parallelzweig Zustandsüberwachüngsmittel zugeordnet sind und dass in jedem Parallelzweig ein jeweiliger Schalter vorgesehen ist, der nach Maßgabe des von den Zustandsüberwachungsmitteln überwachten Batteriezustandes des betreffenden Parallelzweiges steuerbar ist, um selektiv nur diesen betreffenden Parallelzweig für den Stromfluss zu sperren oder freizugeben.

Die Steuerung des zum Zuschalten bzw. zum Abschalten eines betreffenden Parallelzweiges innerhalb der Parallelschaltung vorgesehenen steuerbaren Schalters kann nach einem vorbestimmten Ladeprogramm erfolgen, welches darauf abstellt, dass während des gesamten Ladevorgangs keine größeren Ladezustandsdifferenzen zwischen den einzelnen Parallelzweigen auftreten. Eine Möglichkeit besteht darin, die Parallelzweige, die einen bestimmten Ladezustand erreicht haben, abzuschalten, bis sämtliche Parallelzweige diesen Ladezustand erreicht haben, um dann wieder alle Parallelzweige in der Parallelschaltung zuzuschalten, um einen nächsten Ladepegel zu erreichen, bei dem dann wieder ein entsprechender Ausgleich herbeigeführt werden kann, indem die Parallelzweige entsprechend der Reihenfolge des Erreichens dieses Ladepegels und beim Erreichen dieses Ladepegels abgeschaltet werden, bis alle Parallelzweige den gleichen Ladezustand erreicht haben.

In einer bevorzugten Ausführungsform der Ladekontrollschaltung nach der Erfindung sind die Zustandsüberwachungsmittel jedes Parallelzweiges dazu eingerichtet, den Zustand: "Batterien im Parallelzweig optimal geladen" zu detektieren und bei Detektion dieses Zustandes den steuerbaren Schalter dieses Parallelzweiges in den Unterbrechungszustand zu schalten. "Unterbrechungszustand" bedeutet z.B., dass ein Halbleiterschalter in den hochohmigen Zustand geschaltet wird.

Bei einem Ladevorgang können somit anfänglich sämtliche Parallelzweige parallel geladen werden. Jeder einzelne Parallelzweig wird von seinen Zustandsüberwachungsmitteln individuell auf Erreichen eines optimalen Voll-Ladezustandes überwacht. Da jeder optimal geladene Parallelzweig durch Betätigen des steuerbaren Schalters abgeschaltet und somit von dem an der Parallelschaltung angeschlossenen Ladegerät getrennt wird, kann es nicht mehr vorkommen, dass solche Parallelzweige überladen und dadurch unzulässig erhitzt werden. Die so betriebenen Batteriepacks nach der Erfindung haben eine vergleichsweise lange Batterielebensdauer.

Vorzugsweise sind die Parallelzweige aus gleichartigen Gruppen von in Reihe zueinander und in Reihe zu dem jeweiligen gesteuerten Schalter geschalteten Batterieelementen gebildet. Bei den Batterieelementen kann es sich z.B. um Standard-NiCd-Elemente oder um Standard-NiMH-Elemente handeln. Wie oben bereits erwähnt, kann durch die Anzahl der in Reihe geschalteten Batterieelemente die Nennspannung des betreffenden Parallelzweiges (Batteriespannungsblocks) bestimmt werden.

Die jeweilige Überwachung des Ladezustandes: "Parallelzweig optimal geladen" kann indirekt durch Messung der Temperatur und/oder durch Messung des Ladestromes erfolgen.

Gemäß einer Ausführungsform der Erfindung umfassen die Zustandsüberwachungsmittel Temperatursensoren zur Erfassung der Batterietemperatur, vorzugsweise zur Erfassung einer mittleren Batterietemperatur in den einzelnen Parallelzweigen.

Die genannte Ausführungsform hat eine Betriebsart, in der die Zustandsüberwachungsmittel eines betreffenden Parallelzweiges den steuerbaren Schalter des Parallelzweiges in den Unterbrechungszustand schalten, wenn die Batterietemperatur in dem Parallelzweig einen vorbestimmten Temperaturwert überschreitet, beispielsweise einen Temperaturwert im Bereich von 50°C bis 60°C. Wird dieser vorbestimmte Temperaturwert überschritten, so wird dies als Zeichen dafür gewertet, dass der Parallelzweig nunmehr optimal vollständig geladen ist.

Vorzugsweise umfassen die Zustandsüberwachungsmittel Strommesseinrichtungen zur Erfassung des die einzelnen Parallelzweige durchfließenden Stromes. In einer Betriebsart der Ladekontrollschaltung schalten die Zustandsüberwachungsmittel eines betreffenden Parallelzweiges den steuerbaren Schalter in den Unterbrechungszustand, wenn der durch den Parallelzweig fließende Ladestrom einen vorbestimten Stromwert über die Dauer eines vorbestimmten Zeitintervalls überschreitet. So kann es vorgesehen sein, dass eine Abschaltung des betreffenden Parallelzweiges erfolgt, wenn sein mittlerer Ladestrom über die Dauer von 2 Sekunden einen Wert von 10 Ampere überschreitet. Ein solcher hoher Stromfluss über das vorbestimmte Zeitintervall wird als Hinweis auf das Erreichen des Zustandes: "Parallelzweig optimal geladen" gewertet.

Eine weitere Möglichkeit zur indirekten Detektion des Batteriezustandes: "Parallelzweig optimal geladen" besteht darin, die Temperaturänderung des betreffenden Parallelzweiges pro Zeiteinheit zu überwachen. Gemäß einer Weiterbildung der Erfindung ist es somit vorgesehen, dass die Zustandsüberwachungsmittel eines betreffenden Parallelzweiges dazu eingerichtet sind, den steuerbaren Schalter des Parallelzweiges in den Unterbrechungszustand zu schalten, wenn die Änderung der Batterietemperatur pro Zeiteinheit einen vom jeweiligen Ladestrom abhängigen Vergleichswert überschreitet. In diesem Sinne kann z.B. eine Betriebsart der Ladekontrollschaltung vorgesehen sein, in der die Temperatur über Zeitintervalle gemittelt wird, welche vom jeweiligen Ladestrom abhängen. Falls dann zwei aufeinander folgende Temperaturmittelwerte einen jeweiligen Temperaturanstieg von z.B. jeweils mehr als ein Grad Celsius erkennen lassen, so kann dies als Hinweis auf das Erreichen des Batterieladezustandes: "Parallelzweig optimal geladen" gewertet werden, so dass der Parallelzweig durch Aktivieren des steuerbaren Schalters abgeschaltet und somit vom Ladegerät getrennt wird. Das Mittelungszeitintervall für die Temperaturwertmittelung ist vom gemessenen Ladestrom durch den betreffenden Parallelzweig abhängig. So kann das Mittelungszeitintervall bei einem Ladestrom von 5 Ampere z.B. 60 Sekunden betragen, wohingegen es bei einem Ladestrom von 1,25 Ampere z.B. 240 Sekunden betragen kann.

Gemäß einer weiteren Ausführungsform der Ladekontrollschaltung nach der Erfindung umfassen die Zustandsüberwachungsmittel einen Sicherheitszeitgeber für jeden Parallelzweig, wobei die Zustandsüberwachungsmittel dazu eingerichtet sind, den steuerbaren Schalter des Parallelzweiges in den Unterbrechungszustand zu schalten, sobald ein von dem Zeitgeber nach Maßgabe des den betreffenden Parallelzweig durchfließenden Ladestromes bestimmtes Ladezeitintervall abgelaufen ist. So kann es beispielsweise vorgesehen sein, dass bei einem mittleren Ladestrom von 5 Ampere das Ladezeitintervall nach 1,2 x 60 Minuten abläuft, wohingegen bei einem mittleren Ladestrom von 1,25 Ampere das Ladezeitintervall erst nach 1,2 x 240 Minuten abläuft. Der Ablauf des Ladezeitintervalls wird als Erreichen des Batteriezustandes: "Parallelzweig optimal geladen" gewertet.

Gemäß einer besonders bevorzugten Ausgestaltung der Ladekontrollschaltung nach der Erfindung sind die Zustandsüberwachungsmittel dazu eingerichtet, den Batteriezustand: "Parallelzweig optimal geladen" nach mehreren, insbesondere nach allen der vorstehend genannten Kriterien zu überwachen, nämlich nach den Kriterien der Temperaturüberschreitung, der Überschreitung eines Temperaturdifferenzwertes pro Zeiteinheit, der Überschreitung eines Ladestromwertes über ein bestimmtes Zeitintervall und des Ablaufs eines vom Ladestrom abhängigen Ladezeitintervalls. Sobald der optimale Voll-Ladezustand nach einem dieser Kriterien detektiert und der steuerbare Schalter des betreffenden Parallelzweiges daraufhin in den Unterbrechungszustand geschaltet wurde, verbleibt der Parallelzweig normalerweise in dem "abgeschalteten Zustand", bis die Batterie entladen wird, also bis sie zur Versorgung eines elektrischen Verbrauchers genutzt wird.

In besonders bevorzugter Weise umfassen die Zustandsüberwachungsmittel pro Parallelzweig einen jeweiligen Mikroprozessor zur Steuerung des in dem betreffenden Parallelzweig vorgesehenen steuerbaren Schalters. Es kann sich hierbei um kleine, preiswerte Mikroprozessoren geringer Leistung handeln, da sie keine besonders hohen Anforderungen erfüllen müssen. Jeder dieser Mikroprozessoren dient vorzugsweise zur Auswertung von Messsignalen eines oder mehrerer Temperatursensoren in dem zugeordneten Parallelzweig und ist überdies Element einer Messeinrichtung zur Erfassung des mittleren Ladestromes in dem zugeordneten Parallelzweig.

Gemäß einer Ausführungsform der Erfindung sind die Mikroprozessoren so miteinander verschaltet, dass sie untereinander Daten austauschen können.

Gemäß einer weiteren Ausführungsform der Erfindung ist zusätzlich zu den den einzelnen Parallelzweigen zugewiesenen Mikroprozessoren ein damit in Datenübertragungsverbindung stehender leistungsfähigerer Mikroprozessor vorgesehen, welcher Steuerungsaufgaben bei einem Ladevorgang des Batteriepacks hat und welcher zur Dokumentation von bestimmten Ereignissen während eines Ladevorgangs oder während eines Entladevorgangs genutzt werden kann. Ferner kann ein solcher Hauptprozessor im Rahmen der Erfindung dazu eingerichtet sein, die jeweils aktuelle Kapazität der Batterie bei Bedarf anzuzeigen.

Die Erfindung betrifft auch eine Entladekontrollschaltung für ein Batteriepack aus wiederaufladbaren Batterieelementen, die in jeweiligen Parallelzweigen einer Parallelschaltung von Batteriespannungsquellen angeordnet sind, wobei die Entladekontrollschaltung Zustandsüberwachungsmittel und von den Zustandsüberwachungsmitteln steuerbare Schalter zur Stromflussunterbrechung bzw. Stromflussfreigabe umfasst, wobei jeder Parallelzweig in Reihe zu der von ihm repräsentierten Batteriespannungsquelle aus einem oder mehreren Batterieelementen einen jeweiligen steuerbaren Schalter mit einer integrierten oder parallel dazu geschalteten, in Entladestromflussrichtung leitenden Diode aufweist, wobei die Entladekontrollschaltung dadurch gekennzeichnet ist, dass die Zustandsüberwachungsmittel dazu eingerichtet sind, in einem betreffenden Parallelzweig den jeweiligen steuerbaren Schalter von einem hochohmigen Zustand in einen niederohmigen Zustand zu schalten, wenn ein Entladestrom mit einer Mindeststromstärke die Diode dieses Parallelzweiges durchfließt, um selektiv nur diesen betreffenden Parallelzweig für den Stromfluss zu sperren oder freizugeben.

Die Entladekontrollschaltung nach der Erfindung sorgt dafür, dass das Entladen des Batteriepacks in nachstehend unter Bezugnahme auf die Figuren noch zu erläuternder Weise so erfolgt, dass schwächer geladene Parallelzweige (Batterieblöcke) nicht durch stärker geladene Batterieblöcke unkontrolliert geladen werden.

Vorzugsweise ist die Entladekontrollschaltung mit einer Ladekontrollschaltung nach der Erfindung kombiniert, so dass jeweils ein steuerbarer Schalter in jedem Parallelzweig sowohl der Entladekontrollschaltung als auch der Ladekontrollschaltung zugehörig ist. Entsprechendes gilt für weitere elektronische Elemente, etwa Mikroprozessoren.

Gegenstand der Erfindung ist ferner ein Batteriepack mit einer Batteriekontrollschaltung, die aus einer Ladekontrollschaltung und einer damit kombinierten Entladekontrollschaltung nach der Erfindung besteht.

Das Batteriepack stellt somit eine Zusammenschaltung aus wiederaufladbaren Batterieelementen, elektronischen Bauelementen der Batteriekontrollschaltung und Leitungsverbindungen dar, wobei die wiederaufladbaren Batterieelemente in jeweiligen Parallelzweigen einer Parallelschaltung von Batteriespannungsquellen angeordnet sind. Jede Batteriespannungsquelle ist vorzugsweise aus einem Batterieblock gebildet, der mehrere in Reihe geschaltete Einzelbatterieelemente umfasst. Das Batteriepack kann eine Trägerstruktur oder/und ein gemeinsames Gehäuse für die Batterieblöcke mit zugehörigen elektronischen Komponenten der Batteriekontrollschaltung haben. Die Batterieblöcke mit betreffenden zugeordneten Elementen der Batteriekontrollschaltung können als Module vorbereitet sein, die auswechselbar in die Parallelschaltung eingliederbar sind.

Vorzugsweise ist die Anzahl der zu einem Batteriepack zusammenzufügenden Batterieblöcke variabel, so dass durch Hinzufügung von Batterieblöcken zu der Parallelschaltung oder ggf. durch Wegnahme von Batterieblöcken aus der Parallelschaltung die Batteriekapazität der jeweiligen Nutzungssituation entsprechend angepasst werden kann.

Die Erfindung wird im Folgenden unter Bezugnahme auf die Figuren näher erläutert.
- Fig. 1: zeigt in einer schematischen stark vereinfachten Darstellung ein Batteriepack mit integrierter Ladekontrollschaltung und Entladekontrollschaltung nach der Erfindung.
- Fig. 2: zeigt das Ausführungsbeispiel nach Fig. 1 in etwas detaillierterer, wenngleich auch noch schematischer Darstellung.

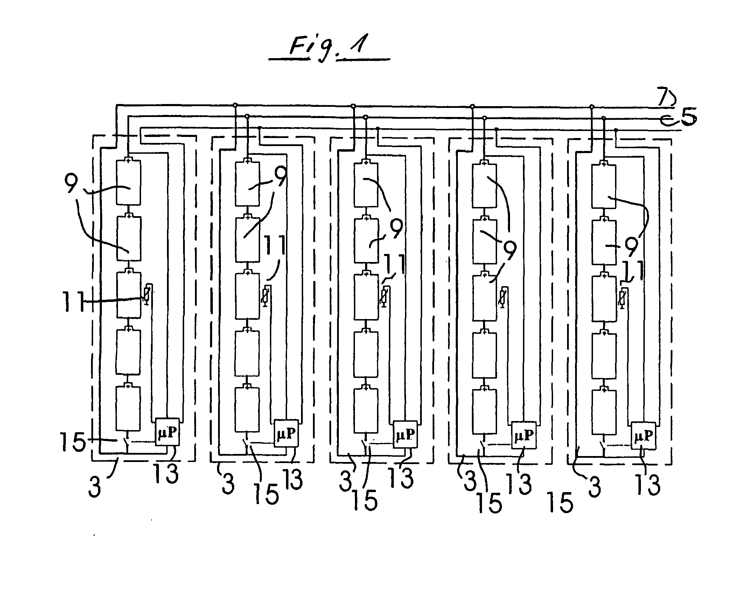

Das Batteriepack 1 besteht aus einer Vielzahl von Blöcken 3, von denen in Fig. 1 stellvertretend für eine normalerweise erheblich größere Anzahl fünf dargestellt sind. Die Blöcke 3 sind durch Parallelzweige einer Parallelschaltung repräsentiert, welche elektrische Anschlüsse 5 und 7 zur Verbindung mit einem Ladegerät oder mit einem elektrischen Verbraucher aufweist. Jeder Block 3 (Parallelzweig) ist aus einer Anzahl von in Reihe geschalteten Einzelbatterieelementen 9 gebildet, bei denen es sich beispielsweise um NiCd- oder NiMH-Batteriezellen einer Standardausführung handeln kann. Im Beispielsfall der Fig. 1 sind in jedem Block 3 fünf Einzelbatterien eingezeichnet. Je nach geforderter Nennspannung der Blöcke 3 können es aber mehr oder weniger Einzelbatterien pro Parallelzweig sein.

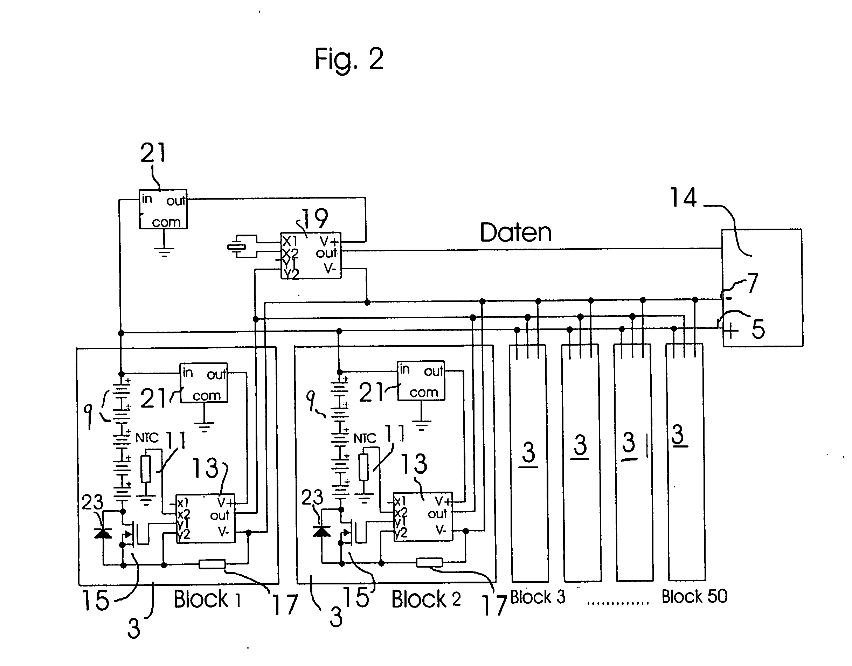

Jeder Block 3 umfasst ferner einen Temperatursensor 11, der so angeordnet ist, dass er eine für den jeweiligen Gesamtblock 3 repräsentative Temperatur erfassen kann. Vorzugsweise handelt es sich bei dem Temperatursensor um einen Temperaturmesswiderstand, z.B. einen NTC-Temperaturmesswiderstand, der an einen Mikroprozessor 13 angeschlossen ist, auf dessen Funktionsweise im Folgenden unter Bezugnahme auf die Fig. 2 noch näher eingegangen wird. Wie Fig. 1 schon erkennen lässt, ist bei dem hier betrachteten Ausführungsbeispiel der Erfindung für jeden Batterieblock 3 ein jeweiliger Mikroprozessor 13 vorgesehen, der einen jeweiligen elektronischen Schalter 15 steuert. Die Schalter 15 sind jeweils in Reihe zu den Einzelbatterieelementen 9 des zugehörigen Blocks 3 geschaltet, so dass sie im (hochohmigen) Unterbrechungszustand Stromfluss durch den Block 3 (Parallelzweig) unterbinden.

Das Ausführungsbeispiel nach Fig. 1 ist in Fig. 2 etwas detaillierter dargestellt. Gemäß Fig. 2 ist an dem Batteriepack 1 momentan ein Ladegerät 14 angeschlossen, um das Batteriepack 1 zu laden.

Die Schalter 15 sind im Ausführungsbeispiel MOSFET-Transistoren. In Reihe zu dem jeweiligen Schalter 15 ist in jedem Parallelzweig 3 ein Strommesswiderstand 17 geschaltet. Die Mikroprozessoren 13 sind in der Lage, den Spannungsabfall an den Strommesswiderständen zu messen und daraus den den betreffenden Batterieblock 3 durchfließenden Ladestrom zu bestimmen.

Mit 19 ist in Fig. 2 ein gesonderter Mikroprozessor bezeichnet, welcher in Datenübertragungsverbindung mit den einzelnen Mikroprozessoren 13 der Batterieblöcke 3 und ferner mit dem Ladegerät 14 steht.

Zur Bereitstellung geregelter Versorgungsspannungen für die Mikroprozessoren 13 und 19 sind Spannungsregler 21 vorgesehen.

In einer bevorzugten Ladebetriebsart funktioniert die Schaltungsanordnung gemäß Fig. 2 wie folgt:

Nach Anschluss des Batteriepacks 1 an das Ladegerät 14 werden alle Mikroprozessoren 13 initialisiert, damit sie Temperaturmesswerte von den zugeordneten Temperatursensoren 11 bereitstellen. Liegt die Temperatur eines oder mehrerer Batterieblöcke 3 während einer Ladestartphase außerhalb des Temperaturbereichs von 0 bis 40°C, so gibt der Hauptprozessor 19 ein Ladestoppsignal an das Ladegerät 14 ab, welches daraufhin den Ladevorgang zentral unterbricht. Die Unterbrechung dauert so lange, bis alle Batterieblöcke 3 wieder eine Temperatur innerhalb des Bereichs von 0 bis 40°C angenommen haben, vorzugsweise mit einer Hysterese von 5°, so dass in dem Fall, dass die Temperatur eines Batterieblocks 3 über 40° angestiegen ist und dieser Temperaturanstieg zur Unterbrechung des Ladevorgangs geführt hat, die Fortsetzung des Ladevorgangs erst dann erfolgt, nachdem die Temperatur der Batterieblöcke 3 wieder unter 35° gefallen ist.

Sofern die Temperaturen der Batterieblöcke 3 während der Startphase innerhalb des Sicherheitstemperaturbereichs von 0 bis 40° bleiben, wird der Ladevorgang fortgesetzt.

Die Mikroprozessoren 13 und die daran angeschlossenen Sensorelemente, nämlich die Temperatursensoren 11 und die Strommesswiderstände 17, zählen zu den Zustandsüberwachungsmitteln, die jedem einzelnen Batterieblock 3 individuell zugeordnet sind. Während des Ladevorganges werten die Mikroprozessoren 13 die Signale der Sensorelemente 11 und 17 aus, um die Temperatur der einzelnen Batterieblöcke 3 und den jeweiligen Ladestrom in den einzelnen Batterieblöcken 3 zu überwachen.

Falls die gemessene Temperatur in einem Batterieblock 3 nach Ablauf der Startphase des Ladevorgangs einen Wert von 55°C überschreitet, so ist dies eine Bedingung für das Abschalten des betreffenden Batterieblocks 3, wobei der dem Batterieblock 3 zugeordnete Mikroprozessor 13 den Schalter 15 in den Unterbrechungszustand schaltet. In Bezug auf den abgeschalteten Batterieblock 3 wird vorausgesetzt, dass dieser seinen optimalen vollständigen Ladezustand erreicht hat. Es gibt noch weitere Kriterien, die das Erreichen des optimalen Voll-Ladezustandes eines betreffenden Batterieblocks 3 indizieren. Falls in einem Batterieblock 3 der vom zugeordneten Mikroprozessor 13 überwachte mittlere Ladestrom über eine Dauer von 2 Sekunden einen Wert von 2 C, beispielsweise 10 Ampere, überschreitet, so schaltet der betreffende Mikroprozessor 13 den steuerbaren Schalter 15 des Batterieblocks 3 in den Unterbrechungszustand. Der Batterieblock 3 wird dann als optimal geladen betrachtet. (Der Ladestrom wird oft auf die Einheit C normiert. Wird z.B. eine Batterie mit einer Kapazität von 1 Ah mit 1 A Ladestrom geladen, so spricht man von einer Ladung mit Ladestrom 1C.)

Die Mikroprozessoren 13 führen überdies eine Mittelwertbildung der gemessenen Temperaturwerte über Zeitintervalle durch, welche vom gemessenen Ladestrom in dem betrachteten Batterieblock 3 abhängen. Beträgt der Ladestrom beispielsweise 1 C (also im Beispielsfall 5 Ampere), so wird der Mittelwert der Temperatur aus Messwerten über ein jeweiliges Zeitintervall von 60 Sekunden berechnet. Falls der gemessene Ladestrom nur 0,25 C (1,25 Ampere) beträgt, so wird die mittlere Temperatur alle 240 Sekunden bestimmt. Falls die Bedingung erfüllt wird, dass zwei aufeinander folgende Temperaturmittelwerte einen Temperaturanstieg von jeweils mehr als 1°C erkennen lassen, dann schaltet der betreffende Mikroprozessor 13 den von ihm gesteuerten Schalter 15 in den Unterbrechungszustand. Es wird angenommen, dass der Batterieblock dann den optimal geladenen Zustand erreicht hat. Darauf hinzuweisen ist noch, dass die Mikroprozessoren 13 auch Timer-Funktionen wahrnehmen, insbesondere die Funktion eines Sicherheitszeitgebers erfüllen, der ein vom gemessenen Ladestrom abhängiges Ladezeitintervall bestimmt. Falls der mittlere Ladestrom 1 C (im Beispielsfall 5 Ampere) beträgt, so läuft dieses Zeitintervall nach 1,2 x 60 Minuten ab. Falls der mittlere Ladestrom 0,25 C (1,25 Ampere) beträgt, so läuft das Ladezeitintervall nach 1,2 x 240 Minuten ab. In einer speziellen Ausführungsform der Erfindung kann es vorgesehen sein, dass die Mikroprozessoren 13 Änderungen des mittleren Ladestromes berücksichtigen, um das Ladezeitintervall entsprechend anzupassen. Mit Ablauf des jeweiligen Ladezeitintervalls schaltet der betreffende Mikroprozessor 13 den von ihm gesteuerten Reihenschalter 15 in den Unterbrechungszustand und es wird vorausgesetzt, dass der betreffende Batterieblock den optimal geladenen Zustand erreicht hat.

Nachdem ein jeweiliger Mikroprozessor 13 für den von ihm überwachten Batterieblock 3 das Erreichen des optimal geladenen Zustandes ermittelt hat, geht er in einen Niedrigenergie-Modus ("low power-mode") über, in dem er einen äußerst geringen Energiebedarf hat und in dem er verbleibt, bis ein Entladevorgang seines Batterieblocks stattfindet. In dem NiedrigenergieModus führen die Mikroprozessoren 13 keine Temperaturmessungen bzw. Strommessungen mit den betreffenden Sensoren 11, 17 durch. In einer alternativen Ausführungsform der Erfindung kann der Niedrigenergie-Modus auch dadurch gekennzeichnet sein, dass der betreffende Mikroprozessor zwar weiterhin die Temperaturmesserte bzw. Strommesswerte erfasst, dies jedoch mit einer wesentlich herabgesetzten Häufigkeit.

Der Hauptprozessor 19 dient u. a. dazu, jeweils festzustellen, wie viele Batterieblöcke 3 jeweils an dem Ladegerät 14 angeschlossen sind. Die Informationen hierüber erhält er von den einzelnen Mikroprozessoren 13. In dem gezeigten Beispiel steuert der Haupt-Mikroprozessor 19 das Batterieladegerät 14 in der Weise, dass dies den Ladestrom auf einen jeweiligen Maximalwert abhängig von der Zahl der an dem Ladegerät 14 angeschlossenen Batterieblöcke 3 begrenzt. Meldet somit ein Mikroprozessor 13 dem Hauptprozessor 19 das Erreichen des optimalen Voll-Ladezustandes des betreffenden Batterieblocks 3, so steuert der Haupt-Mikroprozessor 19 das Ladegerät 14 zur Herabsetzung der Ladestrombegrenzung an. In entsprechender Weise wird der Ladestrom schrittweite weiter zu kleineren Werten hin begrenzt, wenn weitere Batterieblöcke 3 ihren optimalen Voll-Ladezustand erreicht haben.

Ein optionales Merkmal ist folgendes: Stellt der Hauptprozessor 19 dann fest, dass nur noch eine bestimmte Mindestanzahl an Batterieblöcken 3, beispielsweise zehn Batterieblöcke 3, geladen werden, so veranlasst er das simultane Unterbrechen des Ladevorgangs für diese verbliebenen Batterieblöcke 3, wobei sämtliche Schalter 15 dieser Batterieblöcke 3 in den Unterbrechungszustand überführt werden.

Damit ist dann die Situation herbeigeführt, dass das Batteriepack 1 insgesamt als voll geladen betrachtet wird. Durch die individuelle Überwachung der kritischen Ladebedingungen der einzelnen Batterieblöcke innerhalb der Parallelschaltung, nämlich die Überwachung des Temperaturverhaltens und des Ladestroms und durch das individuelle Abschalten solcher Batterieblöcke, bei denen der optimale Voll-Ladezustand detektiert wurde, wird das Batteriepack insgesamt schonend und effizient geladen, wobei alterungsbeschleunigende Effekte unterdrückt werden.

Gemäß einer bevorzugten Ausführungsform der Erfindung sind die die Parallelzweige darstellenden Batterieblöcke 3 als normalerweise einzeln handhabbare Einheiten ausgebildet, die jeweils ihren Temperaturmesssensor 11, ihren Schalter 15, ihren Strommesswiderstand 17, ihren Mikroprozessor 13 und ggf. weitere elektronische Elemente enthalten, so dass sie im Wesentlichen durch einen Anschlussvorgang, z.B. Steckvorgang, elektrisch korrekt angeschlossen in die Parallelschaltung eingebracht werden können. Es sind Ausführungsformen denkbar, bei denen der Hauptprozessor 19 weggelassen wird. Sofern auf die Funktionen des Hauptprozessors 19 nicht verzichtet werden soll, können diese dann von einem oder mehreren der Mikroprozessoren 13 wahrgenommen werden.

Andererseits sind auch Ausführungsformen denkbar, bei denen nicht jeder Batterieblock einen eigenen Mikroprozessor 13 aufweist, sondern ein oder mehrere Zentralprozessoren vorgesehen sind, welche die Messwerte von betreffenden Temperatursensoren 11 und Strommesseinrichtungen 17 überwachen und die Schalter 15 steuern.

Die in Fig. 2 gezeigte Schaltungsanordnung erlaubt nicht nur einen ausgeglichenen Batterieladevorgang, sondern gestattet auch einen schonenden Entladebetrieb des Batteriepacks. Hierzu wird anstelle des Ladegerätes 14 ein mit elektrischer Energie aus dem Batteriepack zu versorgender elektrischer Verbraucher an die äußeren Anschlüsse 5 und 7 des Batteriepacks 1 angeschlossen. Das Batteriepack kommt insoweit mit nur zwei äußeren Anschlüssen 5, 7 für den Ladebetrieb und den Entladebetrieb aus. Eine Entladekontrollschaltung sorgt dafür, dass die Batterieblöcke 3 in der Reihenfolge der Stärke ihrer Aufladung (Spannung) nacheinander zur Teilnahme an dem Entladevorgang in der Parallelschaltung zugeschaltet werden. In dem Fall, dass sämtliche Batterieblöcke 3 unterschiedlich stark aufgeladen sein sollten, wird zunächst der am stärksten geladene Batterieblock 3 zugeschaltet, um den Verbraucher zu versorgen. Hat dieser zugeschaltete Batterieblock 3 dann durch Entladung den Ladezustand erreicht, den der am zweitstärksten aufgeladene Batterieblock 3 hat, so wird letzterer zur Teilnahme an dem Entladevorgang in der Parallelschaltung zugeschaltet, so dass nunmehr zwei Batterieblöcke 3 über den angeschlossenen Verbraucher entladen werden. Ein dritter bzw. weiterer Batterieblock 3 usw. kommt hinzu, sobald die bereits an dem Entladevorgang teilnehmenden Batterieblöcke 3 so weit entladen sind, dass sie den Ladezustand dieses dritten bzw. weiteren Batterieblocks erreicht haben. Dies setzt sich fort, bis sämtliche Batterieblöcke 3 in der Parallelschaltung zugeschaltet sind und den elektrischen Verbraucher versorgen. Durch diese Entladestrategie wird vermieden, dass stärker geladene Batterieblöcke 3 etwaige schwächer geladene Batterieblöcke 3 während der Versorgung eines elektrischen Verbrauchers aufladen und dabei unerwünscht hohe Ströme fließen, die zu alterungsbeschleunigenden Temperaturerhöhungen des Batteriepacks führen könnten.

Die Entladekontrollschaltung umfasst im Ausführungsbeispiel nach Fig. 2 für jeden Parallelzweig, d.h. für jeden Batterieblock 3 eine in Entladestromflussrichtung leitende Diode 23. Eine solche Diode kann alternativ durch eine Diodenstrecke des Schalters 15 realisiert sein.

In Bezug auf den Ladestrom bei einem Ladevorgang sind die Dioden 23 in Sperrrichtung gepolt. In Bezug auf den Entladestromfluss durch die Batterieblöcke 3 bei der Entladung sind die Dioden 23 in Vorwärtsrichtung gepolt.

Wird nun ausgehend von dem Zustand, dass nach vollständiger Aufladung des Batteriepacks sämtliche Schalter (Feldeffekttransistoren) 15 in ihrem hochohmigen Unterbrechungszustand sind, ein elektrischer Verbraucher anstelle des Ladegerätes 14 an den Anschlüssen 5 und 7 angeschlossen, so wird bei unterschiedlich starker Aufladung der einzelnen Parallelzweige zunächst der am stärksten geladene Batterieblock 3 Anlass zu einem Entladestromfluss durch seine Diode 23 und durch den angeschlossenen Verbraucher geben. Der zugehörige Mikroprozessor 13 registriert den Entladestromfluss durch die betreffende Diode 23 dadurch, dass er eine bestimmte Änderung der Spannung an dem Schalter 15 (z.B. das Erreichen eines Spannungswertes von etwa 0,3 V) detektiert. Der Mikroprozessor 13 ist so programmiert, dass er bei einer solchen Erfassung des Einsetzens eines Entladestroms mit einer Mindeststromstärke den Schalter 15 des betreffenden Batterieblocks 3 in den niederohmigen Zustand schaltet. Dieser stärker geladene und als erster in den Entladevorgang einbezogene Batterieblock 3 kann die übrigen parallel geschalteten und zunächst noch schwächer geladenen Batterieblöcke 3 nicht in unerwünschter Weise aufladen, da die Schalter 15 dieser übrigen Batterieblöcke 3 noch vom vorausgegangenen Ladevorgang hochohmig geschaltet sind und die zu den Schaltern 15 parallel liegenden Dioden 23 in Ladestromflussrichtung sperren. Erst wenn der zunächst am stärksten aufgeladene und zuerst in den Entladevorgang einbezogene Batterieblock 3 so weit entladen ist, dass sein Ladezustand mit dem eines weiteren Batterieblocks 3 in der Parallelschaltung im Wesentlichen übereinstimmt, so dass auch dieser weitere Batterieblock 3 Anlass zu einem Entladestromfluss über seine Diode 23 und über den angeschlossenen Verbraucher geben kann, schaltet der zugehörige Mikroprozessor 13 bei Feststellung des Entladestromflusses den betreffenden Schalter 15 in den niederohmigen Zustand, so dass nunmehr auch dieser weitere Batterieblock in die Versorgung des Verbrauchers einbezogen ist. Dies setzt sich fort, bis schließlich alle Batterieblöcke 3 des Batteriepacks zur Versorgung des angeschlossenen Verbrauchers zugeschaltet worden sind.

Je nach Ladezustand der Batterieblöcke 3 nach einem Ladevorgang können auch mehrere Batterieblöcke 3 gleichzeitig in den Entladevorgang einbezogen werden, sofern sie im Wesentlichen gleiche Ladezustände aufweisen.

Es kann vorgesehen sein, dass die Mikroprozessoren 13 bei der oben beschriebenen Detektion des Einsetzens des Entladestroms durch die jeweilige Diode 23 aus ihrem Niedrigenergiemodus, in dem sie die Spannung an dem Schalter 15 überwacht haben, in den Normalbetriebsmodus umgeschaltet werden, um den Batteriezustand des betreffenden Batterieblocks 3 zu überwachen und ggf. mit dem Hauptprozessor 19 (sofern vorhanden) zu kommunizieren. Insbesondere kann die in Fig. 2 gezeigte Schaltung dazu eingerichtet sein, zu überprüfen, ob in einem oder mehreren Batterieblöcken 3 in nicht erwünschter Weise ein Entladestrom fließt, während in anderen Batterieblöcken ein Ladestrom 3 fließt. Sollte dieser Zustand festgestellt werden, so sorgt die Schaltung dann dafür, dass in den Batterieblöcken 3, in denen Ladestromfluss detektiert wurde, sofort der Schalter 15 wieder in den hochohmigen Unterbrechungszustand geschaltet wird. Erst wenn die Ladezustandsbilanz der betreffenden Batterieblöcke 3 wieder so weit ausgeglichen ist, dass jeweils ein Entladestrom bei angeschlossenem Verbraucher fließt, wird der jeweilige Batterieblock 3 zur Teilnahme an dem Entladevorgang zugeschaltet.

## Patentansprüche

1. Ladekontrollschaltung für ein Batteriepack aus wiederaufladbaren Batterieelementen (9), die in jeweiligen Parallelzweigen (3) einer Parallelschaltung von Batteriespannungsquellen angeordnet sind, wobei die Ladekontrollschaltung Zustandsüberwachungsmittel (11, 13, 17) zur Überwachung des Batteriezustandes von Batterieelementen (9) umfasst und wobei die Ladekontrollschaltung von den Zustandsüberwachungsmitteln steuerbare Schalter (15) zur Stromflussunterbrechung bzw. Stromflussfreigabe umfasst,
**dadurch gekennzeichnet, dass** jedem Parallelzweig (3) Zustandsüberwachungsmittel (11, 13, 17) zugeordnet sind und dass in jedem Parallelzweig (3) ein jeweiliger Schalter (15) vorgesehen ist, der nach Maßgabe des von den Zustandsüberwachungsmitteln (11, 13, 17) überwachten Batteriezustandes des betreffenden Parallelzweiges (3) steuerbar ist, um selektiv nur diesen betreffenden Parallelzweig (3) für den Stromfluss zu sperren oder freizugeben.

2. Ladekontrollschaltung nach Anspruch 1,
**dadurch gekennzeichnet, dass** die Zustandsüberwachungsmittel (11, 13, 17) eines Parallelzweiges (3) dazu eingerichtet sind, den steuerbaren Schalter (15) in den Unterbrechungszustand zu schalten, wenn sie einen Batteriezustand: "Parallelzweig voll geladen" detektieren.

3. Ladekontrollschaltung nach Anspruch 1 oder 2,
**dadurch gekennzeichnet, dass** die Parallelzweige (3) aus gleichartigen Gruppen von in Reihe zueinander und in Reihe zu dem jeweiligen gesteuerten Schalter (15) geschalteten Batterieelementen (9) gebildet sind.

4. Ladekontrollschaltung nach einem der vorhergehenden Ansprüche,
**dadurch gekennzeichnet, dass** die Zustandsüberwachungsmittel (11, 13, 17) Temperatursensoren (11) zur Erfassung der Batterietemperatur in den einzelnen Parallelzweigen (3) umfassen.

5. Ladekontrollschaltung nach Anspruch 4,
**dadurch gekennzeichnet, dass** die Zustandsüberwachungsmittel (11, 13, 17) eines betreffenden Parallelzweiges (3) dazu eingerichtet sind, den steuerbaren Schalter (15) des Parallelzweiges (3) in den Unterbrechungszustand zu schalten, wenn die von dem Temperatursensor (11) erfasste Batterietemperatur in dem Parallelzweig (3) einen vorbestimmten Temperaturwert überschreitet.

6. Ladekontrollschaltung nach einem der vorhergehenden Ansprüche,
**dadurch gekennzeichnet, dass** die Zustandsüberwachungsmittel (11, 13, 17) Strommesseinrichtungen (13, 17) zur Erfassung des die einzelnen Parallelzweige (3) durchfließenden Stromes umfassen.

7. Ladekontrollschaltung nach Anspruch 6,
**dadurch gekennzeichnet, dass** die Zustandsüberwachungsmittel (11, 13, 17) dazu eingerichtet sind, den steuerbaren Schalter (15) des betreffenden Parallelzweiges in den Unterbrechungszustand zu schalten, wenn der durch den Parallelzweig (3) fließende Ladestrom einen vorbestimmten Stromwert über die Dauer eines vorbestimmten Zeitintervalls überschreitet.

8. Ladekontrollschaltung nach einem der vorhergehenden Ansprüche,
**dadurch gekennzeichnet, dass** die Zustandsüberwachungsmittel (11, 13, 17) dazu eingerichtet sind, den steuerbaren Schalter (15) des jeweiligen Parallelzweigs (3) in den Unterbrechungszustand zu schalten, wenn die Änderung der Batterietemperatur pro Zeiteinheit einen vom jeweiligen Ladestrom durch den Parallelzweig (3) abhängigen Vergleichswert überschreitet.

9. Ladekontrollschaltung nach einem der vorhergehenden Ansprüche,
**dadurch gekennzeichnet, dass** die Zustandsüberwachungsmittel (11, 13, 17) einen Sicherheitszeitgeber (13) umfassen und dass die Zustandsüberwachungsmittel (11, 13, 17) den steuerbaren Schalter des jeweiligen Parallelzweiges in den Unterbrechungszustand schalten, wenn ein von dem Zeitgeber (13) nach Maßgabe des den betreffenden Parallelzweig (3) durchfließenden Ladestromes bestimmtes Ladzeitintervall abgelaufen ist.

10. Ladekontrollschaltung nach einem der vorhergehenden Ansprüche,
**dadurch gekennzeichnet, dass** die Zustandsüberwachungsmittel (11, 13, 17) pro Parallelzweig (3) einen jeweiligen Mikroprozessor (13) zur Steuerung des jeweiligen Schalters (15) umfassen.

11. Entladekontrollschaltung für ein Batteriepack aus wiederaufladbaren Batterieelementen (9), die in jeweiligen Parallelzweigen einer Parallelschaltung von Batteriespannungsquellen (3) angeordnet sind, wobei die Entladekontrollschaltung Zustandsüberwachungsmittel (11, 13, 17) und von den Zustandsüberwachungsmitteln steuerbare Schalter (15) zur Stromflussunterbrechung bzw. Stromflussfreigabe umfasst, wobei jeder Parallelzweig in Reihe zu der von ihm repräsentierten Batteriespannungsquelle (3) aus einem oder mehreren Batterieelementen (9) einen jeweiligen steuerbaren Schalter (15) mit einer integrierten oder parallel dazu geschalteten, in Entladestromflussrichtung leitenden Diode (23) aufweist,
**dadurch gekennzeichnet, dass** die Zustandsüberwachungsmittel (13) dazu eingerichtet sind, in einem betreffenden Parallelzweig (3) den jeweiligen steuerbaren Schalter (15) von einem hochohmigen Zustand in einen niederohmigen Zustand zu schalten, wenn ein Entladestrom mit einer Mindeststromstärke die Diode (23) dieses Parallelzweiges (3) durchfließt, um selektiv nur diesen betreffenden Parallelzweig (3) für den Stromfluss zu sperren oder freizugeben.

12. Entladekontrollschaltung nach Anspruch 11,
**dadurch gekennzeichnet, dass** die steuerbaren Schalter (15) Transistoren, insbesondere Feldeffekttransistoren, sind.

13. Entladekontrollschaltung nach Anspruch 11 oder 12,
**dadurch gekennzeichnet, dass** die Zustandsüberwachungsmittel wenigstens einen Mikroprozessor (13, 19), vorzugsweise wenigstens jeweils einen Mikroprozessor (13) für jeden Parallelzweig (3) umfassen.

14. Batteriekontrollschaltung, bestehend aus einer Ladekontrollschaltung nach einem der Ansprüche 1-10 und einer damit kombinierten Entladekontrollschaltung nach einem der Ansprüche 11 - 13.

15. Batteriepack mit einer darin integrierten Ladekontrollschaltung nach einem der Ansprüche 1-10 oder/und mit einer Entladekontrollschaltung nach einem der Ansprüche 11 - 13.

## Claims

1. Charge control circuit for a battery pack comprising rechargeable battery elements (9) which are arranged in respective parallel branches (3) of a parallel circuit of battery voltage sources, the charge control circuit comprising state monitoring means (11, 13, 17) for monitoring the battery state of battery elements (9), and the charge control circuit comprising switches (15), which can be controlled by the state monitoring means, for interrupting the current flow or releasing the current flow,
**characterized in that** each parallel branch (3) has associated state monitoring means (11, 13, 17), and **in that** a respective switch (15) is provided in each parallel branch (3), it being possible for said respective switch (15) to be controlled on the basis of the battery state, which is monitored by the state monitoring means (11, 13, 17), of the relevant parallel branch (3), in order to selectively block or release only this relevant parallel branch (3) for the current flow.

2. Charge control circuit as claimed in Claim 1,
**characterized in that** the state monitoring means (11, 13, 17) of a parallel branch (3) are set to switch the controllable switch (15) to the interrupted state when it detects a battery state "parallel branch fully charged".

3. Charge control circuit as claimed in Claim 1 or 2,
**characterized in that** the parallel branch (3) are formed from identical groups of series-connected battery elements (9) which are connected in series with the respective controlled switch (15).

4. Charge control circuit as claimed in one of the preceding claims,
**characterized in that** the state monitoring means (11, 13, 17) comprise temperature sensors (11) for detecting the battery temperature in the individual parallel branches (3).

5. Charge control circuit as claimed in Claim 4,
**characterized in that** the state monitoring means (11, 13, 17) of a relevant parallel branch (3) are set to switch the controllable switch (15) of the parallel branch (3) to the interrupted state when the battery temperature detected by the temperature sensor (11) in the parallel branch (3) exceeds a predetermined temperature value.

6. Charge control circuit as claimed in one of the preceding claims,
**characterized in that** the state monitoring means (11, 13, 17) comprise current measuring devices (13, 17) for detecting the current flowing through the individual parallel branch (3).

7. Charge control circuit as claimed in Claim 6,
**characterized in that** the state monitoring means (11, 13, 17) are set to switch the controllable switch (15) of the relevant parallel branch to the interrupted state when the charge current flowing through the parallel branch (3) exceeds a predetermined current value for the duration of a predetermined time interval.

8. Charge control circuit as claimed in one of the preceding claims,
**characterized in that** the state monitoring means (11, 13, 17) are set to switch the controllable switch (15) of the respective parallel branch (3) to the interrupted state when the change in the battery temperature per unit time exceeds a comparison value depending on the respective charge current through the parallel branch (3).

9. Charge control circuit as claimed in one of the preceding claims,
**characterized in that** the state monitoring means (11, 13, 17) comprise a safety timer (13), and **in that** the state monitoring means (11, 13, 17) switch the controllable switch of the respective parallel branch to the interrupted state when a charge time interval, which is determined by the timer (13) on the basis of the charge current flowing through the relevant parallel branch (3), has expired.

10. Charge control circuit as claimed in one of the preceding claims,
**characterized in that** the state monitoring means (11, 13, 17) comprise a respective microprocessor (13) per parallel branch (3) for the purpose of controlling the respective switch (15).

11. Discharge control circuit for a battery pack comprising rechargeable battery elements (9), which are arranged in respective parallel branches of a parallel circuit of battery voltage sources (3), the discharge control circuit comprising state monitoring means (11, 13, 17) and switches (15), which can be controlled by the state monitoring means, for interrupting the current flow or releasing the current flow, each parallel branch having, in series with the battery voltage source (3) comprising one or more battery elements (9) represented by it, a respective controllable switch (15) having an integrated diode (23), or one which is connected in parallel therewith, which is conductive in the discharge current flow direction,
**characterized in that** the state monitoring means (13) are set so as to switch, in a relevant parallel branch (3), the respective controllable switch (15) from a high-resistance state to a low-resistance state when a discharge current having a minimum current level flows through the diode (23) of this parallel branch (3), in order to selectively block or release only this relevant parallel branch (3) for the current flow.

12. Discharge control circuit as claimed in Claim 11,
**characterized in that** the controllable switches (15) are transistors, in particular field-effect transistors.

13. Discharge control circuit as claimed in Claim 11 or 12,
**characterized in that** the state monitoring means comprise at least one microprocessor (13, 19), preferably at least in each case one microprocessor (13) for each parallel branch (3).

14. Battery control circuit, comprising the charge control circuit as claimed in one of Claims 1 - 10 and the discharge control circuit as claimed in one of Claims 11 - 13 combined therewith.

15. Battery pack having the charge control circuit as claimed in one of Claims 1 - 10 integrated therein and/or having the discharge control circuit as claimed in one of Claims 11 - 13.

## Revendications

1. Circuit de contrôle de charge pour un bloc de batterie constitué d'éléments de batterie rechargeables (9), qui sont disposés dans des branches parallèles respectives (3) d'un circuit parallèle de sources de tension de batterie, dans lequel le circuit de contrôle de charge comprend des moyens de monitorage d'état (11, 13, 17) pour surveiller l'état de batterie des éléments de batterie (9) et dans lequel le circuit de contrôle de charge comprend un commutateur (15) contrôlable par les moyens de monitorage d'état pour l'interruption de conduction de courant ou la validation de conduction de courant,
**caractérisé en ce que** des moyens de monitorage d'état (11, 13, 17) sont adjoints à chaque branche parallèle (3) et **en ce qu'**un commutateur respectif (15) est prédisposé dans chaque branche parallèle (3), lequel est contrôlable conformément à l'état de batterie de la branche parallèle concernée (3), surveillé par les moyens de monitorage d'état (11, 13, 17), pour valider ou invalider sélectivement seulement cette branche parallèle concernée (3) pour la conduction de courant.

2. Circuit de contrôle de charge selon la revendication 1,
**caractérisé en ce que** les moyens de monitorage d'état (11, 13, 17) d'une branche parallèle (3) sont agencés de manière que le commutateur contrôlable (15) soit commuté dans l'état d'interruption quand ils détectent un état de batterie « branche parallèle complètement chargée ».

3. Circuit de contrôle de charge selon la revendication 1 ou 2,
**caractérisé en ce que** les branches parallèles (3) sont formées de groupes similaires d'éléments de batterie (9) connectés en série entre eux et en série avec le commutateur contrôlable respectif (15).

4. Circuit de contrôle de charge selon l'une quelconque des revendications précédentes,
**caractérisé en ce que** les moyens de monitorage d'état (11, 13, 17) comprennent des capteurs de température (11) pour la détection de la température de batterie dans les branches parallèles individuelles (3).

5. Circuit de contrôle de charge selon la revendication 4,
**caractérisé en ce que** les moyens de monitorage d'état (11, 13, 17) d'une branche parallèle (3) sont agencés de manière que le commutateur contrôlable (15) de la branche parallèle (3) soit commuté dans l'état d'interruption quand la température de batterie détectée par le capteur de température (11) dans la branche parallèle (3) dépasse une valeur de température prédéterminée.

6. Circuit de contrôle de charge selon l'une quelconque des revendications précédentes,
**caractérisé en ce que** les moyens de monitorage d'état (11, 13, 17) comprennent des dispositifs de mesure de courant (13, 17) pour l'acquisition du courant circulant à travers les branches parallèles individuelles (3).

7. Circuit de contrôle de charge selon la revendication 6,
**caractérisé en ce que** les moyens de monitorage d'état (11, 13, 17) sont agencés de manière que le commutateur contrôlable (15) de la branche parallèle concernée (3) soit commuté dans l'état d'interruption quand le courant de charge circulant à travers la branche parallèle (3) dépasse une valeur de courant prédéterminée pour une durée d'un intervalle de temps prédéterminé.

8. Circuit de contrôle de charge selon l'une quelconque des revendications précédentes,
**caractérisé en ce que** les moyens de monitorage d'état (11, 13, 17) sont agencés de manière que le commutateur contrôlable (15) de chaque branche parallèle (3) soit commuté dans l'état d'interruption quand la variation de température de batterie par unité de temps dépasse une valeur comparative dépendant de courant de charge respectif à travers la branche parallèle (3).

9. Circuit de contrôle de charge selon l'une quelconque des revendications précédentes,
**caractérisé en ce que** les moyens de monitorage d'état (11, 13, 17) comprennent un temporisateur de sécurité (13) et **en ce que** les moyens de monitorage d'état (11, 13, 17) commutent le commutateur contrôlable de chaque branche parallèle (3) dans l'état d'interruption quand un intervalle de temps de charge déterminé par le temporisateur de sécurité (13) conformément au courant de charge circulant dans la branche parallèle concernée (3) est écoulé.

10. Circuit de contrôle de charge selon l'une quelconque des revendications précédentes,
**caractérisé en ce que** les moyens de monitorage d'état (11, 13, 17) comprennent pour chaque branche parallèle (3) un microprocesseur respectif (13) pour la commande du commutateur respectif (15).

11. Circuit de contrôle de décharge pour un bloc de batterie constitué d'éléments de batterie rechargeables (9), qui sont disposés dans des branches parallèles respectives (3) d'un circuit parallèle de sources de tension de batterie, dans lequel le circuit de contrôle de décharge comprend des moyens de monitorage d'état (11, 13, 17) pour surveiller l'état de batterie des éléments de batterie (9) et un commutateur (15) contrôlable par les moyens de monitorage d'état pour l'interruption de conduction de courant ou la validation de conduction de courant, dans lequel chaque branche parallèle comporte un commutateur contrôlable respectif (15) avec une diode conductrice dans la direction de conduction de courant de décharge (23), intégrée ou connectée en parallèle à celui-ci, en série avec la source de tension de batterie représentée par celle-ci provenant d'un ou plusieurs éléments de batterie (9)
**caractérisé en ce que** des moyens de monitorage d'état (13) sont agencés de manière que, dans une branche parallèle concernée (3), le commutateur contrôlable respectif (15) soit commuté d'un état à haute impédance à un état à basse impédance quand un courant de décharge avec une intensité minimale circule dans la diode (23) de cette branche parallèle, pour valider ou invalider sélectivement seulement cette branche parallèle concernée (3) pour la conduction de courant.

12. Circuit de contrôle de décharge selon la revendication 11,
**caractérisé en ce que** les commutateurs contrôlables (15) sont des transistors, en particulier des transistors à effet de champ.

13. Circuit de contrôle de décharge selon la revendication 11 ou 12,
**caractérisé en ce que** les moyens de monitorage d'état comprennent au moins un microprocesseur (13, 19), avantageusement au moins un microprocesseur (13) pour chaque branche parallèle (3).

14. Circuit de contrôle de batterie, constitué d'un circuit de contrôle de charge selon l'une quelconque des revendications 1 à 10 et d'un circuit de contrôle de décharge selon l'une quelconque des revendications 11 à 13, combiné avec celui-ci.

15. Bloc de batterie avec un circuit de contrôle de charge selon l'une quelconque des revendications 1 à 10 intégré dans celui-ci et/ou avec un circuit de contrôle de décharge selon l'une quelconque des revendications 11 à 13.
